# EUROPEAN PATENT SPECIFICATION

(11) **EP 3 245 572 B1**
(45) Date of publication and mention of the grant of the patent: **15.01.2020**
(21) Application number: 16737216.8
(22) Date of filing: 15.01.2016
(51) Int. Cl.: G06F 1/3234, G06F 3/147, G06F 1/3206

(54) **EFFECTING A DEVICE POWER STATE TRANSITION RELATED TO AMBIENT LIGHTING DIFFERENTIALS**
DURCHFÜHRUNG EINES LEISTUNGSZUSTANDSÜBERGANGS EINER VORRICHTUNG IM ZUSAMMENHANG MIT UMGEBUNGSBELEUCHTUNGSUNTERSCHIEDEN
RÉALISATION D'UNE TRANSITION D'ÉTAT DE PUISSANCE D'UN DISPOSITIF LIÉE AUX DIFFÉRENCES D'ÉCLAIRAGE AMBIANT

(30) Priority: 15.01.2015 US 201514598037
(43) Date of publication of application: 22.11.2017
(73) Proprietor: Rakuten, Inc., Tokyo 158-0094 (JP)
(72) Inventor: IMANA, Juan Ernesto Salas, Toronto, Ontario M6K 1A7 (CA); LANDAU, Benjamin, Toronto, Ontario M6K 1A7 (CA)
(74) Representative: EIP
(86) International application number: PCT/JP2016/000195
(87) International publication number: WO 2016/114145

(56) References cited:
- WO-A1-2013/042331
- JP-A- 2014 206 842
- JP-A- 2014 222 811
- US-A1- 2013 088 523
- US-A1- 2013 094 126

## Description

### Technical Field

Examples described herein relate to a system and method for operating a computing device in transitioning operation alternate power states

### Background Art

An electronic personal display is a mobile computing device that displays information to a user. While an electronic personal display may be capable of many of the functions of a personal computer, a user can typically interact directly with an electronic personal display without the use of a keyboard that is separate from, or coupled to, but distinct from the electronic personal display itself. Some examples of electronic personal displays include mobile digital devices/tablet computers and electronic readers (e-readers) such (e.g., Apple iPad(Registered Trademark), Microsoft(Registered Trademark) Surface(Trademark), Samsung Galaxy Tab(Registered Trademark) and the like), handheld multimedia smartphones (e.g., Apple iPhone(Registered Trademark), Samsung Galaxy S(Registered Trademark), and the like), and handheld electronic readers (e.g., Amazon Kindle(Registered Trademark), Barnes and Noble Nook(Registered Trademark), Kobo Aura HD, Kobo Aura H2O, Kobo GLO and the like).

Some electronic personal display devices are purpose built devices designed to perform especially well at displaying digitally stored content for reading or viewing thereon. For example, a purpose build device may include a display that reduces glare, performs well in high lighting conditions, and/or mimics the look of text as presented via actual discrete pages of paper. While such purpose built devices may excel at displaying content for a user to read, they may also perform other functions, such as displaying images, emitting audio, recording audio, and web surfing, among others.

Electronic personal displays are among numerous kinds of consumer devices that can receive services and utilize resources across a network service. Such devices can operate applications or provide other functionality that links a device to a particular account of a specific service. For example, the electronic reader (e-reader) devices typically link to an online bookstore, and media playback devices often include applications that enable the user to access an online media electronic library (or e-library). In this context, the user accounts can enable the user to receive the full benefit and functionality of the device.

As mobile computing devices having functionality for e-reading proliferate, users find it beneficial to be able to operate such devices in many varied surroundings to continue reading their favorite e-book, such as for example, at the beach, at poolside, and other situations in which the presence of device hard buttons with device housing crevices attendant thereto, such as buttons for powering the device off and on, may potentially allow entry of undesired debris or liquids. JP 2014 222811 A relates to an information apparatus 100 that includes a first display unit 111 and a first illuminance sensor 112 in a first housing 110, and a second display unit 121 and a second illuminance sensor 122 disposed in a second housing 120 that is openably connected to the first housing 110. Document US 2013/088523 A1 relates to a method for adjusting display brightness.

### [Brief Description of Drawings]

The accompanying drawings, which are incorporated in and form a part of this specification, illustrate various embodiments and, together with the Description of Embodiments, serve to explain principles discussed below. The drawings referred to in this brief description of the drawings should not be understood as being drawn to scale unless specifically noted.

[Fig. 1] FIG. 1 illustrates a computing device configured for operation in transitioning between power states based on ambient lighting differentials between device surfaces, in an embodiment.
[Fig. 2] FIG. 2 illustrates a schematic architecture of a computing device configured for operation in transitioning between alternate power states based on ambient lighting differentials between device surfaces, according to an embodiment.
[Fig. 3] FIG. 3 illustrates an example embodiment operation for a computing device transitioning between power states of the device based on ambient lighting differentials between device surfaces.
[Fig. 4] FIG. 4 illustrates a method for operating a computing device to transition between alternate power states based on ambient lighting differentials between device surfaces, according to an embodiment.

### Description of Embodiments

The invention is as set out in the independent claims, further aspects of the invention are outlined in the dependent claims. Embodiments that do not fall within the scope of the claims do not describe part of the invention. "E-books" are a form of electronic publication content stored in digital format in a computer non-transitory memory, viewable on a computing device having display functionality. An e-book can correspond to, or mimic, the paginated format of a printed publication for viewing, such as provided by printed literary works (e.g., novels) and periodicals (e.g., magazines, comic books, journals, etc.). Optionally, some e-books may have chapter designations, as well as content that corresponds to graphics or images (e.g., such as in the case of magazines or comic books). Multi-function devices, such as cellular-telephony or messaging devices, can utilize specialized applications (e.g., specialized e-reading application software) to view e-books in a format that mimics the paginated printed publication. Still further, some devices (sometimes labeled as "e-readers") can display digitally-stored content in a more reading-centric manner, while also providing, via a user input interface, the ability to manipulate that content for viewing, such as via discrete pages arranged sequentially (that is, pagination) corresponding to an intended or natural reading progression, or flow, of the content therein.

An "e-reading device", variously referred to herein as an electronic personal display or mobile computing device, can refer to any computing device that can display or otherwise render an e-book. By way of example, an e-reading device can include a mobile computing device on which an e-reading application can be executed to render content that includes e-books (e.g., comic books, magazines, etc.). Such mobile computing devices can include, for example, a multi-functional computing device for cellular telephony/messaging (e.g., feature phone or smart phone), a tablet computer device, an ultra-mobile computing device, or a wearable computing device with a form factor of a wearable accessory device (e.g., smart watch or bracelet, glass-wear integrated with a computing device, etc.). As another example, an e-reading device can include an e-reader device, such as a purpose-built device that is optimized for an e-reading experience (e.g., with e-Ink displays).

While engaged in an immersive e-reading experience, a combination of factors such as ambient lighting brightness, reflection and glare from the display screen while viewing displayed content may significantly affect reading comfort and enjoyment of the user's reading experience. A user should ideally be able to read comfortably for extended periods of time on the device display screen, to provide a digital reading experience that is comparable to the natural convenience of reading a physical paper book.

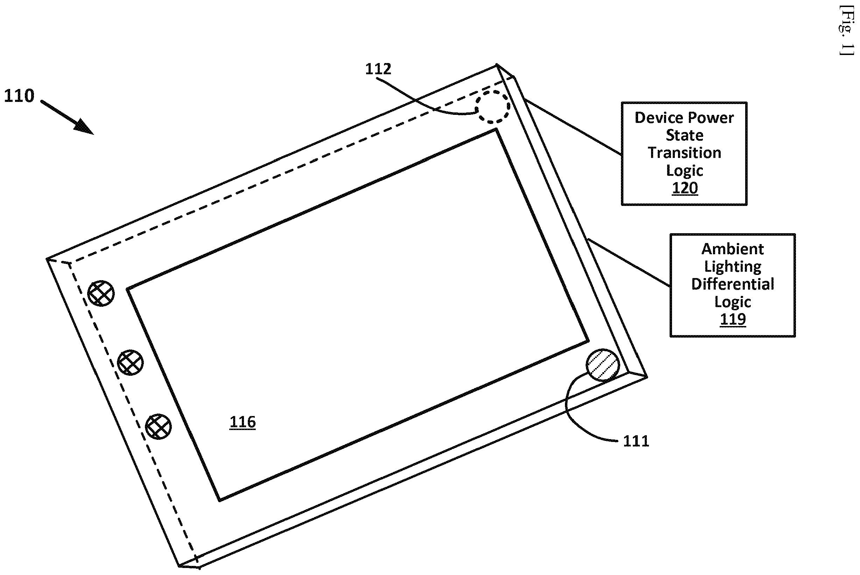

FIG. 1 illustrates a computing mobile device 110, in one embodiment configured for operation including device power state transition logic 120 for transitioning to an alternate power level or state. In the example of FIG. 1, computing device 110 comprises an electronic personal display device, also referred to herein as e-reading device 110.

The e-reading device 110 can correspond to any electronic personal display device on which applications and application resources (e.g., e-books, media files, documents) can be rendered and consumed. For example, the e-reading device 110 can correspond to a tablet or a telephony/messaging device (e.g., smart phone). In one implementation, for example, e-reading device 110 can run an e-reader application that links the device to a network service and enables e-books provided through the service to be downloaded and stored, for consumption by way of e-reading. In another implementation, the e-reading device 110 can run a media playback or streaming application that receives files or streaming data from the network service. By way of example, the e-reading device 110 can be equipped with hardware and software to optimize certain application activities, such as reading electronic content (e.g., e-books). For example, the e-reading device 110 can have a tablet-like form factor, although variations are possible. In some cases, display screen 116 of e-reading device 110 may be a liquid crystal display or may be an e-ink display or bi-stable display.

In additional detail, the network service can include a content store server and a user account electronic library (e-library) storing e-books or digital content items. In some embodiments, the content store server and user account e-library may be implemented via server computing devices, as well as a server cloud computing system. The content store server may be an online store for purchasing of digital content items for download therefrom onto a resident memory of an e-reading device 110 and/or the user account e-library which associates the e-reading device 110 with a user having an account. The user account can also be associated with ownership of, and/or accessibility to, one or more e-books and digital content items stored in content store server.

Further with reference to an example depiction of FIG. 1, the display screen 116 may be touch-sensitive, to process touch inputs including gestures (e.g., swipes). For example, the display screen may be integrated with one or more touch sensors to provide a touch-sensing region on their respective display surfaces. For some embodiments, the one or more touch sensors may include capacitive sensors that can sense or detect a human body's capacitance as input. In the example of FIG. 1, the touch-sensing region coincides with a substantial surface area, if not all, of the display screen 116.

In some embodiments, the e-reading device 110 includes features for providing functionality related to displaying paginated content, including paginated content comprising an e-magazine or e-comic book. The e-reading device 110 can include page transitioning logic, which enables the user to transition through paginated content. The e-reading device 110 can display pages of e-books, e-magazines and e-comics, and enable the user to transition from one page state to another. In particular, an e-book can provide content that is rendered sequentially in pages, and the e-book can display page states in the form of single pages, multiple pages or portions thereof. Accordingly, a given page state can coincide with, for example, a single page, or two or more pages displayed at once. The page transitioning logic can operate to enable the user to transition from a given page state to another page state In the specific example embodiment where a given page state coincides with a single page, for instance, each page state corresponding to one page of the digitally constructed, ordered sequence of pages paginated to comprise, in one embodiment, an e-book. In some implementations, the page transitioning logic enables single page transitions, chapter transitions, or cluster transitions (multiple pages at one time).

According to some embodiments, the e-reading device 110 includes display sensor logic to detect and interpret user input or user input commands made through interaction with the touch sensors of display screen 116. By way of example, display sensor logic can detect a user making contact with the touch-sensing region of the display screen 116, otherwise referred to herein as a touch event. More specifically, display sensor logic can detect a touch event also referred to herein as a tap, an initial tap held in contact at display screen 116 for longer than some pre-defined threshold duration of time (otherwise known as a "long press" or a "long touch"), multiple taps performed either sequentially or generally simultaneously, swiping gesture actions made through user interaction with the touch sensing region of the display screen 116 or any combination of these gesture actions. Although referred to herein as a "touch" or a tap, it should be appreciated that in some design implementations, sufficient proximity to the screen surface, just short of actual physical contact, may register a "contact" or a "touch event". Furthermore, display sensor logic can interpret such interactions in a variety of ways. For example, each such interaction may be interpreted as a particular type of user input associated with a respective input command, execution of which may trigger a change in state at touchscreen display 116.

Still with reference to FIG. 1, a light-sensing arrangement for sensing a level of ambient lighting, in one embodiment, includes an optical window 111, which in an alternate embodiment example may also be such as an optical window for a camera lens, integrated into a front surface housing of e-reader device 110. The optical window 111, typically made of a material that substantially transmits visible light, such as poly-methyl-methacrylate (PMMA), polycarbonate (PC) or the like, may alternatively be integrated into display elements of display screen 116 during a manufacturing process, such as via injection-molding. Optical window 111 may be in optical communication via a light guide arrangement with one or more light-sensitive components, including a light-emitting diode, phototransistor or photo-resistor, resident on a printed circuit board having electronic hardware components of e-reader device 110. In another embodiment of the ambient light-sensing arrangement, a liquid crystal display embodiment of display 116 may be lighted by an electro-luminescent panel fitted behind it, serving as the light-sensitive component that detects ambient lighting levels. In the above example embodiments of the ambient light sensor, indications of ambient lighting are sensed, together with changes in the ambient lighting brightness levels.

Ambient lighting differential logic module 119 operates, in an embodiment, to determine a brightness level differential based on ambient lighting brightness levels as sensed via front surface optical window 111 and rear housing surface 112 of computing device 110.

Device power state transition logic module 120, in an embodiment, operates to transition computing device 110 between different power states, including but not limited to: a sleep mode or other low power state, a power-off state, a power-on state, and an intermediate or partial-power-on state such as a device wake state. Device power state transition logic module 120 includes logic providing, in part, to accomplish transitioning to a different power level, such as for device power consumption and conservation reasons, based on a magnitude of the brightness level differential provided by ambient lighting differential logic module 119 of computing device 110.

Device power state transition logic module 120 and ambient lighting differential logic module 119 can be implemented as software logic modules comprising instructions stored in a memory of display device 110. One or more embodiments of device power state transition logic module 120 and ambient lighting differential logic module 119 described herein may be implemented using programmatic modules or components. A programmatic module or component may include a program, a subroutine, a portion of a program, or a software or a hardware component capable of performing one or more stated tasks or functions in conjunction with one or more processors. As used herein, a module or component can exist on a hardware component independently of other modules or components. Alternatively, a module or component can be a shared element or process of other modules, programs and hardware components.

Furthermore, the one or more embodiments of device power state transition logic module 120 and ambient lighting differential logic module 119 described herein may be implemented through instructions that are executable by one or more processors. These instructions may be stored on a computer-readable non-transitory medium. In particular, the numerous computing and communication devices shown with embodiments of the invention include processor(s) and various forms of computer memory, including volatile and non-volatile forms, storing data and instructions. Examples of computer-readable mediums include permanent memory storage devices, such as hard drives on personal computers or servers. Other examples of computer storage mediums include portable storage units, flash or solid-state memory (such as included on many cell phones and consumer electronic devices) and magnetic memory. Computers, terminals, network enabled devices (e.g., mobile devices such as cell phones and wearable computers) are all examples of machines and devices that utilize processors, memory, and instructions stored on computer-readable mediums. Additionally, embodiments may be implemented in the form of computer-programs, or a computer usable storage medium capable of storing such a program.

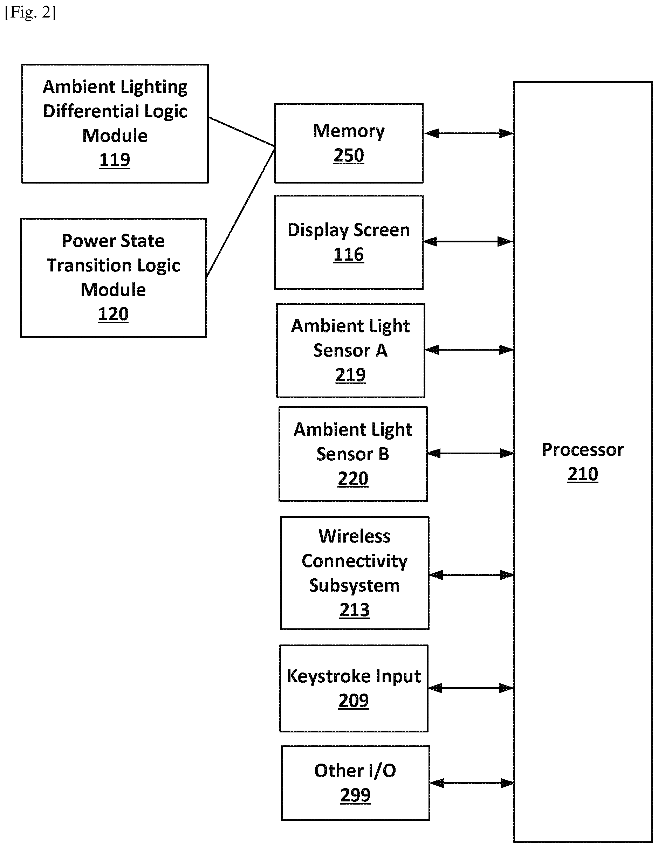

With reference now to FIG. 2, illustrated is a schematic architecture of mobile computing device 110, such as a tablet or e-reader, configured for transitioning operation between different device power states based on ambient lighting brightness differential as sensed from different surfaces of mobile computing device 110, according to an embodiment.

E-reading device 110 further includes processor 210, and a memory 250 storing instructions and logic pertaining at least to device power state transition logic module 120.

Processor 210 can implement functionality using the logic and instructions stored in memory 250. Additionally, in some implementations, processor 210 communicates with the network service. More specifically, the e-reading device 110 can access the network service to receive various kinds of resources (e.g., digital content items such as e-books, configuration files, account information), as well as to provide information (e.g., user account information, service requests etc.). For example, e-reading device 110 can receive application resources, such as e-books or media files, that the user elects to purchase or otherwise download via the network service 121. The application resources, including e-books having content organized as a series of digitally constructed pages, that are downloaded onto the e-reading device 110 can be stored in memory 250.

In some implementations, display screen 116 can correspond to, for example, a liquid crystal display (LCD) or light emitting diode (LED) display that illuminates in order to provide content generated from processor 210. In some implementations, display 116 can be touch-sensitive. For example, in some embodiments, one or more of the touch sensor components may be integrated with display 116. In other embodiments, the touch sensor components may be provided (e.g., as a layer) above or below display 116 such that individual touch sensor components track different regions of display 116. Display screen 116 can correspond to an electronic paper type display, such as an e-ink or bi-stable display that mimic conventional paper in the manner in which content is displayed. Typically, e-ink displays are more suited to e-reading under extreme ambient lighting conditions, such as very bright daylight or in near-darkness at bedtime, resulting is less eye strain as compared to reading, for example, on an LCD display screen. Examples of such electronic paper display technologies include electrophoretic displays, electro-wetting displays, and electro-fluidic displays. Display screen 116 can also be touch-sensitive, having a set of touch sensor components integrated therewith, providing touch screen capability.

Processor 210 can receive input from various sources, including touch sensor components at display 116, keystroke input 208 such as from a virtual or rendered keyboard, ambient light sensing arrangements 219 and 220 configured to detect ambient lighting brightness levels from respective first and second surfaces of computing device 110, and other input mechanisms 299 (e.g., buttons, mouse, microphone, etc.). With reference to examples described herein, processor 210 can respond to input detected at the touch sensor components. In some embodiments, processor 210 responds to inputs from the touch sensor components in order to facilitate or enhance e-book activities such as generating e-book content on displays 116, performing page transitions of the displayed e-book content, powering off the device 110 and/or displays 116, activating a screen saver, launching or closing an application, and/or otherwise altering a state of display 116 in relation to a power state of device 110.

Ambient light sensors 219, 220 may include a light-emitting diode, phototransistor or photo-resistor, resident on a printed circuit board having electronic hardware components of e-reader device 110 in optical communication with optical window 111 of computing device 110. In another embodiment of the ambient light-sensors 219, 220, a liquid crystal display embodiment of display screen 116 may be lighted by an electro-luminescent panel fitted behind it, serving as the light-sensitive component that detects ambient lighting levels. In the above example embodiments of the ambient light sensors 219, 220, indications of ambient lighting levels may be sensed, and also changes in the ambient lighting brightness levels detected at a surface of device 110 upon which optical window 111 or display screen 116 of the ambient lighting sensor arrangement may be variously disposed.

In some embodiments, memory 250 may store display sensor logic that monitors for user interactions detected through the touch sensor components, and further processes the user interactions as a particular input or type of input. In an alternative embodiment, display sensor logic module may be integrated with the touch sensor components. For example, the touch sensor components can be provided as a modular component that includes integrated circuits or other hardware logic, and such resources can provide some or all of display sensor logic. In variations, some or all of display sensor logic may be implemented with processor 210 (which utilizes instructions stored in memory 250), or with an alternative processing resource.

E-reading device 110 further includes wireless connectivity subsystem 213, comprising a wireless communication receiver, a transmitter, and associated components, such as one or more embedded or internal antenna elements, local oscillators, and a processing module such as a digital signal processor (DSP) (not shown). As will be apparent to those skilled in the field of communications, the particular design of wireless connectivity subsystem 213 depends on the communication network in which display device 110 is intended to operate, such as in accordance with Wi-Fi, Bluetooth, Near Field Communication (NFC) communication protocols, and the like.

Ambient lighting differential logic module 119 can be implemented as a software module comprising instructions stored in memory 250 of mobile device 110. Ambient lighting differential logic module 119 may store one or more predetermined or pre-settable threshold amount(s) ambient light differential(s) with regard to ambient lighting levels sensed at different surfaces, such as a top surface, a rear surface, and an edge surface, of computing device 110.

Device power state transition logic module 120 can be implemented as a software module comprising instructions stored in memory 250 of mobile display device 110. Device power state transition logic module 120, in an embodiment, operates to transition computing device 110 between different power states, including but not limited to: a sleep mode or other low power state, a power-off state, a power-on state, and an intermediate or partial-power-on state such as a device wake state. Device power state transition logic module 120 includes logic providing, in part, to accomplish transitioning to a different (i.e., lower or higher) power level, such as for device power consumption and conservation reasons, when a magnitude of the brightness level differential provided by ambient lighting differential logic module 119 exceeds the predetermined threshold differential amount(s).

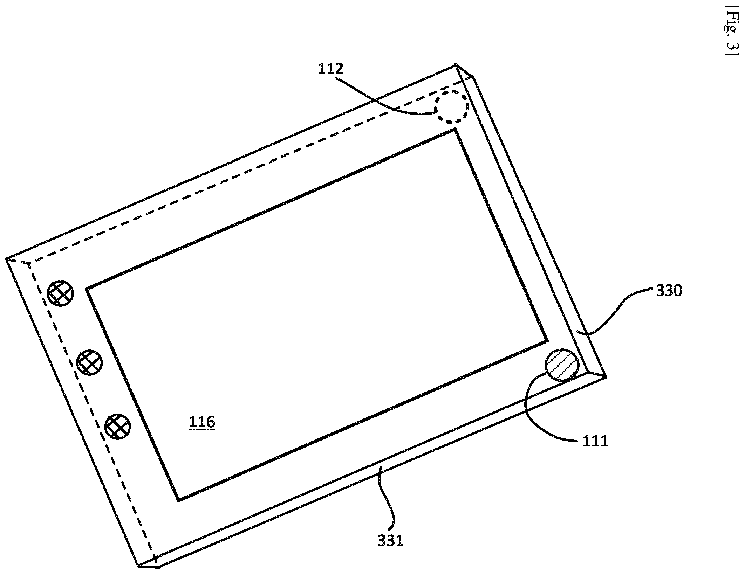

Next in reference to FIG. 3, depicted in view 300 is an example embodiment of computing device 110, having optical window 111 located on a front housing surface and optical window 112 located at a rear housing surface. Next, if computing device 110 is rotated and placed in a front-face-downwards position upon a solid surface once a user opts to stop using, or e-reading content, on the device display screen 116, during normal daylight conditions for example, the ambient light intensity level received via optical window 111 will be much less than that received via now-upwards-facing optical window 112 on the rear surface. Ambient lighting differential logic module 119 therefore determines a greater differential in ambient lighting levels than a comparatively smaller differential that exists when computing device 110 is held in mid-air for e-reading or other usage, when optical windows 111 and 112 are both unobstructed in receiving substantially the same ambient lighting brightness levels, as neither of their respective device surfaces are darkened or blocked. Upon a determination that a threshold value for ambient lighting differential has been exceeded, which in one embodiment may comprise a 50 per cent differential between brightness levels sensed via ambient lighting sensors 219, 220 on respective surfaces of computing device 110, device power state transition logic 120 effects a change in power state, to a lower power device mode including a sleep mode or a power-off state.

Still with reference to FIG. 3, it is contemplated that any one of optical windows 111, 112 may instead be located on edge surfaces 330 or 331 if computing device 110, on edge surfaces located respectively oppositely thereto (not shown).

In a further embodiment, ambient lighting differential logic module 119 may be in communication with a time of day clock function or application within computing device 110, and operate to invoke different predetermined threshold amounts of ambient lighting brightness differentials in accordance with the time of day; for example, using a larger value for the threshold differential at daytime, and a smaller differential at nighttime when ambient lighting conditions are comparatively dimmer.

Following the transition to a lower power device state, it is contemplated that a reverse procedure may be effected with computing device 110 as configured herein, such as by a user picking up the device in prelude to usage, a substantial decrease in the ambient lighting brightness differential from the previously-darkened-out front surface may be sensed via the respective ambient lighting brightness sensor, whereupon the device state may be transitioned from the lower power or sleep state to a higher power, or more active, device wake state, in anticipation of the user proceeding to resume e-reading content, for example.

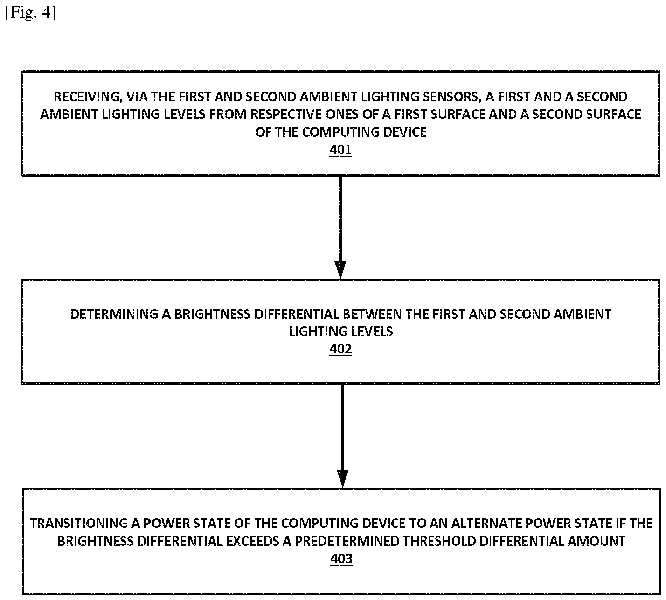

Next with reference to FIG. 4, illustrated is a method for transitioning operation between power states of computing device 110 depending on a substantial differential in ambient brightness lighting levels as determined at different surfaces of the device, according to an embodiment. In describing the example of FIG. 4, reference will be made to components such as described with regard to FIGS. 1 through 3 for purposes of illustrating components for performing a step or sub-step as described.

At step 401, receiving, via the first and second ambient lighting sensors 219, 220 a first and a second ambient lighting levels from respective ones of a first surface 111 and a second surface 112 of the computing device 110.

At step 402, determining a brightness differential between the first and second ambient lighting levels.

At step 403, transitioning a power state of the computing device 110 to an alternate power state if the brightness differential exceeds a predetermined threshold differential amount, in one embodiment transitioning to a lower power state such a device sleep mode or a device power shutoff state if the threshold amount comprises at least a 50 percent differential in ambient lighting brightness levels.

Although illustrative embodiments have been described in detail herein with reference to the accompanying drawings, variations to specific embodiments and details are contemplated and encompassed by this disclosure. Furthermore, it is contemplated that a particular feature described, either individually or as part of an embodiment, can be combined with other individually described features, or parts of other embodiments. Thus, absence of describing combinations should not preclude the inventor(s) from claiming rights to such combinations.

## Claims

1. A computing device (110) comprising:
a memory (250) that stores a set of instructions;
a first and a second ambient lighting brightness sensor (219, 220); and
a processor (210) that access the instructions in memory (250), the processor (210) further configured to:
receive, via the first and second ambient lighting brightness sensors (219, 220), a first and a second ambient lighting level from respective ones of a first surface and a second surface of the computing device (110);
determine a brightness differential between the first and second ambient lighting levels; and
transition a power state of the computing device (110) to an alternate power state based on the brightness differential,
wherein the first surface is a device front housing surface within which a display screen (116) is disposed, and
the second surface is a housing surface within which no display screen is disposed.

2. The computing device (110) of claim 1 wherein a rear housing surface is oppositely located to the front housing surface.

3. The computing device (110) of claim 2 wherein the housing surface comprises the rear housing surface.

4. The computing device (110) of any one of claims 1 - 3 wherein the one of the first and second surfaces comprises an edge surface (330, 331) of the computing device (110).

5. The computing device (110) of any one of claims 1 - 4 wherein the processor is further configured to transition the power state of the computing device (110) to the alternate power state if the brightness differential exceeds a predetermined threshold differential amount.

6. The computing device (110) of claim 5 wherein the processor is further configured to transition the power state of the computing device (110) to the alternate power state if the first ambient lighting level is less than the second ambient lighting level by the predetermined threshold differential amount.

7. The computing device (110) of claim 5 or 6 wherein the predetermined threshold differential amount comprises at least a 50 percent difference in the ambient lighting brightness levels of the first and second surfaces.

8. The computing device (110) of any one of claims 5 - 7 wherein the processor is further configured to invoke different predetermined threshold differential amounts in accordance with the time of day.

9. The computing device (110) of claim 8 wherein a larger value is invoked at daytime, and a smaller value is invoked at nighttime for the predetermined threshold differential amount.

10. The computing device (110) of any one of claims 1 - 9 wherein the device (110) is transitioned to a lower power sleep state.

11. The computing device (110) of any one of claims 1 - 10 wherein the device (110) is transitioned to a power-off state.

12. The computing device (110) of any one of claims 1 - 11 wherein at least one of the first and second ambient lighting brightness sensors (219, 220) is one of a light emitting diode, a photo-resistor and a phototransistor component in optical communication with one of an optical window (111) of a front housing and an optical window (112) of a rear housing of the computing device (110).

13. The computing device (110) of any one of claims 1 - 12 wherein at least one of the first and second ambient lighting brightness sensors (219, 220) comprises an optical window (111, 112) of an on-device camera lens.

14. The computing device (110) of any one of claims 1 - 13 wherein at least one of the first and second ambient lighting brightness levels is sensed by an electroluminescent panel in optical communication with a display screen (116) of the computing device (110).

15. A method executed in a processor of a computing device (110), the computing device (110) further including a first and a second ambient lighting brightness sensor (219, 220) and a memory (250) storing instructions, the method comprising:
receiving, via the first and second ambient lighting brightness sensors (219.220), a first and a second ambient lighting level from respective ones of a first surface and a second surface of the computing device (110);
determining a brightness differential between the first and second ambient lighting levels; and
transitioning a power state of the computing device (110) to an alternate power state based on the brightness differential
wherein the first surface is a device front housing surface within which a display screen (116) is disposed, and the second surface is a housing surface within which no display screen is disposed.

16. A computer program including instructions that, when executed by a processor (210) of a computing device (110) including a first and a second ambient lighting brightness sensor (219, 220) and a memory (250) storing instructions, cause the processor (210) to perform operations comprising:
receiving, via the first and second ambient lighting brightness sensors (219, 220), a first and a second ambient lighting level from respective ones of a first surface and a second surface of the computing device (110);
determining a brightness differential between the first and second ambient lighting levels; and
transitioning a power state of the computing device (110) to an alternate power state based on the brightness differential,
wherein the first surface is a device front housing surface within which a display screen (116) is disposed, and
the second surface is a housing surface within which no display screen is disposed.

## Patentansprüche

1. Rechenvorrichtung (110), mit:
einem Speicher (250), der einen Satz von Instruktionen speichert,
einem ersten und einem zweiten Umgebungslichthelligkeitssensor (219, 220), und
einen Prozessor (210), der auf die Instruktionen in dem Speicher (250) zugreift, wobei der Prozessor (210) ferner ausgestaltet ist zum:
Empfangen eines ersten und eines zweiten Umgebungslichtniveaus jeweils von einer ersten Oberfläche und einer zweiten Oberfläche der Rechenvorrichtung (110) über den ersten und den zweiten Umgebungslichthelligkeitssensor (219, 220),
Bestimmen eines Helligkeitsdifferenzials zwischen dem ersten und dem zweiten Umgebungslichtniveau, und
Versetzen eines Leistungszustands der Rechenvorrichtung (110) in einen alternativen Leistungszustand auf Basis des Helligkeitsdifferenzials,
wobei die erste Oberfläche eine Vorrichtungsfrontgehäuseoberfläche ist, in der ein Anzeigebildschirm (116) angeordnet ist, und
die zweite Oberfläche eine Gehäuseoberfläche ist, in der kein Anzeigebildschirm angeordnet ist.

2. Rechenvorrichtung (110) nach Anspruch 1, wobei eine rückwärtige Gehäuseoberfläche der Frontgehäuseoberfläche gegenüberliegt.

3. Rechenvorrichtung (110) nach Anspruch 2, wobei die Gehäuseoberfläche die rückwärtige Gehäuseoberfläche umfasst.

4. Rechenvorrichtung (110) nach einem der Ansprüche 1 bis 3, wobei die erste oder die zweite Oberfläche eine Kantenfläche (330, 331) der Rechenvorrichtung (110) umfasst.

5. Rechenvorrichtung (110) nach einem der Ansprüche 1 bis 4, wobei der Prozessor ferner ausgestaltet ist, den Leistungszustand der Rechenvorrichtung (110) in den alternativen Leistungszustand zu versetzen, wenn das Helligkeitsdifferenzial ein vorbestimmtes Schwellenwertdifferenzialmaß überschreitet.

6. Rechenvorrichtung (110) nach Anspruch 5, wobei der Prozessor ferner ausgestaltet ist, den Leistungszustand der Rechenvorrichtung (110) in den alternativen Leistungszustand zu versetzen, wenn das erste Umgebungslichtniveau um das vorbestimmten Schwellenwertdifferenzialmaß geringer ist als das zweite Umgebungslichtniveau.

7. Rechenvorrichtung (110) nach Anspruch 5 oder 6, wobei das vorbestimmte Schwellenwertdifferenzialmaß wenigstens eine 50%ige Differenz in den Umgebungslichthelligkeitsniveaus der ersten und der zweiten Oberflächen umfasst.

8. Rechenvorrichtung (110) nach einem der Ansprüche 5 bis 7, wobei der Prozessor ferner ausgestaltet ist, entsprechend der Tageszeit unterschiedliche vorbestimmte Schwellenwertdifferenzialmaße zu verwenden.

9. Rechenvorrichtung (110) nach Anspruch 8, wobei während des Tages für das vorbestimmtes Schwellenwertdifferenzialmaß ein größerer Wert verwendet wird und während der Nacht ein geringerer Wert verwendet wird.

10. Rechenvorrichtung (110) nach einem der Ansprüche 1 bis 9, wobei die Vorrichtung in einen Niederleistungsschlafzustand versetzt wird.

11. Rechenvorrichtung (110) nach einem der Ansprüche 1 bis 10, wobei die Vorrichtung in einen Aus-Zustand versetzt wird.

12. Rechenvorrichtung (110) nach einem der Ansprüche 1 bis 11, wobei der erste und/ oder der zweite Umgebungslichthelligkeitssensor (219, 220) eine Licht-emittierende Diode, ein Fotoresistor oder eine Fototransistorkomponente in optischer Verbindung mit einem optischen Fenster (111) eines Frontgehäuses oder einem optischen Fenster (112) eines rückwärtigen Gehäuses der Rechenvorrichtung (110) ist.

13. Rechenvorrichtung (110) nach einem der Ansprüche 1 bis 12, wobei der erste und/ oder der zweite Umgebungslichthelligkeitssensor (219, 220) ein optisches Fenster (111, 112) einer Kameralinse der Vorrichtung umfasst.

14. Rechenvorrichtung (110) nach einem der Ansprüche 1 bis 13, wobei das erste und/ oder das zweite Umgebungslichthelligkeitsniveau durch eine Elektrolumineszenz-Leuchtplatte in optischer Verbindung mit einem Anzeigebildschirm (116) der Rechenvorrichtung (110) erfasst wird.

15. Verfahren, dass in einem Prozessor einer Rechenvorrichtung (110) ausgeführt wird, wobei die Rechenvorrichtung (110) ferner einen ersten und einen zweiten Umgebungslichthelligkeitssensor (219, 220) und einen Speicher (250) umfasst, der einen Satz von Instruktionen speichert, wobei das Verfahren umfasst:
Empfangen eines ersten und eines zweiten Umgebungslichtniveaus jeweils von einer ersten Oberfläche und einer zweiten Oberfläche der Rechenvorrichtung (110) über den ersten und den zweiten Umgebungslichthelligkeitssensor (219, 220),
Bestimmen eines Helligkeitsdifferenzials zwischen dem ersten und dem zweiten Umgebungslichtniveau, und
Versetzen eines Leistungszustands der Rechenvorrichtung (110) in einen alternativen Leistungszustand auf Basis des Helligkeitsdifferenzials,
wobei die erste Oberfläche eine Vorrichtungsfrontgehäuseoberfläche ist, in der ein Anzeigebildschirm (116) angeordnet ist, und
die zweite Oberfläche eine Gehäuseoberfläche ist, in der kein Anzeigebildschirm angeordnet ist.

16. Computerprogramm mit Instruktionen, die, wenn sie durch einen Prozessor (210) einer Rechenvorrichtung (111) mit einem ersten und einem zweiten Umgebungslichthelligkeitssensor (219, 220) und einem Speicher (250), der Instruktionen speichert, ausgeführt werden, den Prozessor (210) dazu veranlassen, Operationen auszuführen, mit:
Empfangen eines ersten und eines zweiten Umgebungslichtniveaus jeweils von einer ersten Oberfläche und einer zweiten Oberfläche der Rechenvorrichtung (110) über den ersten und den zweiten Umgebungslichthelligkeitssensor (219, 220),
Bestimmen eines Helligkeitsdifferenzials zwischen dem ersten und dem zweiten Umgebungslichtniveau, und
Versetzen eines Leistungszustands der Rechenvorrichtung (110) in einen alternativen Leistungszustand auf Basis des Helligkeitsdifferenzials,
wobei die erste Oberfläche eine Vorrichtungsfrontgehäuseoberfläche ist, in der ein Anzeigebildschirm (116) angeordnet ist, und
die zweite Oberfläche eine Gehäuseoberfläche ist, in der kein Anzeigebildschirm angeordnet ist.

## Revendications

1. Dispositif informatique (110) comprenant :
une mémoire (250) qui stocke un ensemble d'instructions ;
un premier et un second capteur de luminosité de lumière ambiante (219, 220) ; et
un processeur (210) qui a accès aux instructions dans la mémoire (250), le processeur (210) étant conçu en outre pour :
recevoir, par l'intermédiaire des premier et second capteurs de luminosité de lumière ambiante (219, 220), un premier et un second niveau de lumière ambiante à partir de celles respectives d'une première surface et d'une seconde surface du dispositif informatique (110) ;
déterminer un différentiel de luminosité entre les premier et second niveaux de lumière ambiante ; et
faire passer un état de puissance du dispositif informatique (110) à un autre état de puissance, sur la base du différentiel de luminosité,
dans lequel la première surface est une surface de boîtier avant du dispositif, à l'intérieur de laquelle est disposé un écran d'affichage (116), et
la seconde surface est une surface de boîtier à l'intérieur de laquelle n'est disposé aucun écran d'affichage.

2. Dispositif informatique (110) selon la revendication 1, dans lequel une surface de boîtier arrière est située à l'opposé de la surface de boîtier avant.

3. Dispositif informatique (110) selon la revendication 2, dans lequel la surface de boîtier comprend la surface de boîtier arrière.

4. Dispositif informatique (110) selon l'une quelconque des revendications 1 à 3, dans lequel l'une des première et seconde surfaces comprend une surface de bord (330, 331) du dispositif informatique (110).

5. Dispositif informatique (110) selon l'une quelconque des revendications 1 à 4, dans lequel le processeur est conçu en outre pour faire passer l'état de puissance du dispositif informatique (110) à l'autre état de puissance si le différentiel de luminosité dépasse une grandeur prédéterminée de seuil de différentiel.

6. Dispositif informatique (110) selon la revendication 5, dans lequel le processeur est conçu en outre pour faire passer l'état de puissance du dispositif informatique (110) à l'autre état de puissance si le premier niveau de lumière ambiante est inférieur au second niveau de lumière ambiante de la grandeur prédéterminée de seuil de différentiel.

7. Dispositif informatique (110) selon la revendication 5 ou 6, dans lequel la grandeur prédéterminée de seuil de différentiel comprend une différence d'au moins 50 pour cent entre les niveaux de luminosité de lumière ambiante des première et seconde surfaces.

8. Dispositif informatique (110) selon l'une quelconque des revendications 5 à 7, dans lequel le processeur est conçu en outre pour faire appel à des grandeurs prédéterminées de seuil de différentiel différentes en fonction de l'heure du jour.

9. Dispositif informatique (110) selon la revendication 8, dans lequel il est fait appel à une valeur plus grande pendant la journée, et il est fait appel à une valeur plus petite pendant la nuit, pour la grandeur prédéterminée de seuil de différentiel.

10. Dispositif informatique (110) selon l'une quelconque des revendications 1 à 9, où le dispositif (110) passe à un état de veille à plus faible puissance.

11. Dispositif informatique (110) selon l'une quelconque des revendications 1 à 10, où le dispositif (110) passe à un état hors tension.

12. Dispositif informatique (110) selon l'une quelconque des revendications 1 à 11, dans lequel au moins l'un des premier et second capteurs de luminosité de lumière ambiante (219, 220) est l'un d'une diode électroluminescente, d'une photorésistance et d'un composant phototransistor en communication optique avec une fenêtre optique (111) de boîtier avant ou avec une fenêtre optique (112) de boîtier arrière du dispositif informatique (110).

13. Dispositif informatique (110) selon l'une quelconque des revendications 1 à 12, dans lequel au moins l'un des premier et second capteurs de luminosité de lumière ambiante (219, 220) comprend une fenêtre optique (111, 112) d'objectif d'appareil de prise de vues intégré au dispositif.

14. Dispositif informatique (110) selon l'une quelconque des revendications 1 à 13, dans lequel au moins l'un des premier et second niveaux de luminosité de lumière ambiante est détecté par un panneau électroluminescent en communication optique avec un écran d'affichage (116) du dispositif informatique (110).

15. Procédé exécuté par un processeur de dispositif informatique (110), le dispositif informatique (110) comportant en outre un premier et un second capteur de luminosité de lumière ambiante (219, 220) et une mémoire (250) stockant des instructions, le procédé comprenant les étapes consistant à :
recevoir, par l'intermédiaire des premier et second capteurs de luminosité de lumière ambiante (219, 220), un premier et un second niveau de lumière ambiante à partir de celles respectives d'une première surface et d'une seconde surface du dispositif informatique (110) ;
déterminer un différentiel de luminosité entre les premier et second niveaux de luminosité de lumière ambiante ; et
faire passer un état de puissance du dispositif informatique (110) à un autre état de puissance, sur la base du différentiel de luminosité,
dans lequel la première surface est une surface de boîtier avant du dispositif, à l'intérieur de laquelle est disposé un écran d'affichage (116), et
la seconde surface est une surface de boîtier à l'intérieur de laquelle n'est disposé aucun écran d'affichage.

16. Programme informatique comportant des instructions qui, lorsqu'elles sont exécutées par un processeur (210) de dispositif informatique (110) comportant un premier et un second capteur de luminosité de lumière ambiante (219, 220) ainsi qu'une mémoire (250) stockant des instructions, amènent le processeur (210) à effectuer des opérations consistant à :
recevoir, par l'intermédiaire des premier et second capteurs de luminosité de lumière ambiante (219, 220), un premier et un second niveau de lumière ambiante à partir de celles respectives d'une première surface et d'une seconde surface du dispositif informatique (110) ;
déterminer un différentiel de luminosité entre les premier et second niveaux de lumière ambiante ; et
faire passer un état de puissance du dispositif informatique (110) à un autre état de puissance sur la base du différentiel de luminosité,
dans lequel la première surface est une surface de boîtier avant du dispositif, à l'intérieur de laquelle est disposée un écran d'affichage (116), et
la seconde surface est une surface de boîtier à l'intérieur de laquelle n'est disposé aucun écran d'affichage.
